# EUROPEAN PATENT APPLICATION

(11) **EP 2 468 832 A1**
(43) Date of publication of application: **27.06.2012**
(21) Application number: 11194725.5
(22) Date of filing: 21.12.2011
(51) Int. Cl.: C09J 7/02, B32B 15/04

(54) **Conductive adhesive tape**

(30) Priority: 22.12.2010 JP 2010285828
(71) Applicant: Nitto Denko Corporation, Osaka 567-8680 (JP)
(72) Inventor: Nonaka, Takahiro, Ibaraki-shi, Osaka 567-8680 (JP); Daigaku, Noritsugu, Ibaraki-shi, Osaka 567-8680 (JP); Murakami, Ai, Ibaraki-shi, Osaka 567-8680 (JP); Nakao, Kota, Ibaraki-shi, Osaka 567-8680 (JP); Yamazaki, Hiroshi, Ibaraki-shi, Osaka 567-8680 (JP)
(74) Representative: Grünecker, Kinkeldey, Stockmair & Schwanhäusser

(57) **Abstract**

A conductive adhesive tape includes a conductive layer, and an adhesive layer formed on the surface of the conductive layer. In the adhesive layer, an adhesive layer through-hole penetrating the adhesive layer in the thickness direction thereof is formed. The conductive layer includes a conductive layer passage portion formed in the adhesive layer through-hole. A low melting point metal layer is provided at an end face of the conductive layer passage portion, the end face reaching surface of the adhesive layer.

## Description

### BACKGROUND OF THE INVENTION

### Field of the Invention

The present invention relates to a conductive adhesive tape.

### Description of Related Art

Conventionally, conductive adhesive tapes having both conductivity and adhesiveness have been used for connections between connection terminals of various electrical devices.

For example, Japanese Utility Model Publication No. Sho 63-46980 has proposed a conductive adhesive tape including a conductive tape substrate, and an adhesive layer provided on the surface of the conductive tape substrate, wherein a terminal portion is provided on the adhesive layer side of the conductive tape substrate, the terminal portion penetrating the adhesive layer and the distal end of the terminal portion slightly covering the surface of the adhesive layer.

In Japanese Utility Model Publication No. Sho 63-46980, electrical conductivity between the conductive adhesive tapes and connection terminals are achieved by allowing the adhesive layer to adhere to and bringing the terminal portion into contact with the connection terminals.

### SUMMARY OF THE INVENTION

However, in the conductive adhesive tape of Japanese Utility Model Publication No. Sho 63-46980, the terminal portions are directly in contact with the connection terminals, and therefore their adhesion strength is weak, thus causing disadvantages, such as failing to keep conductivity for a long period of time.

An object of the present invention is to provide a conductive adhesive tape having excellent conductivity and durability.

A conductive adhesive tape of the present invention includes a conductive layer, an adhesive layer formed on the surface of the conductive layer, wherein in the adhesive layer, an adhesive layer through-hole penetrating the adhesive layer in the thickness direction thereof is formed, the conductive layer includes a conductive layer passage portion formed in the adhesive layer through-hole, and a low melting point metal layer is provided at an end face of the conductive layer passage portion, the end face reaching the surface of the adhesive layer.

In the conductive adhesive tape of the present invention, it is preferable that the conductive layer passage portion is formed along an inner peripheral face of the adhesive layer through-hole so as not to close the adhesive layer through-hole.

In the conductive adhesive tape of the present invention, it is preferable that a conductive layer folded portion that is folded over along the surface of the adhesive layer is provided at an end portion of the conductive layer passage portion, the end portion reaching the surface of the adhesive layer.

In the conductive adhesive tape of the present invention, it is preferable that the low melting point metal layer is provided at an external face of the conductive layer folded portion exposed from the adhesive layer.

In the conductive adhesive tape of the present invention, it is preferable that the low melting point metal layer is provided at an internal face of the conductive layer including the conductive layer passage portion and the conductive layer folded portion that are in close contact with the adhesive layer.

In the conductive adhesive tape of the present invention, it is preferable that a low melting point metal forming the low melting point metal layer has a melting point of 180°C or less.

In the conductive adhesive tape of the present invention, it is preferable that the low melting point metal forming the low melting point metal layer contains 30 to 80 mass% of bismuth.

With the conductive adhesive tape of the present invention, by heating the conductive adhesive tape at low temperature when the conductive adhesive tape is connected to a conduction object, the low melting point metal layer provided at the end face of the conductive layer passage portion reaching the surface of the adhesive layer can be melted, and adhesive strength between the conductive layer passage portion and the conduction object can be improved through the low melting point metal layer.

Therefore, electrical connection between the conductive layer passage portion and the conduction object can be ensured.

Thus, excellent conductivity is kept at the conductive layer passage portion, and the conductivity can be kept for a long period of time.

### BRIEF DESCRIPTION OF THE DRAWINGS

FIG. 1 shows a plan view of an embodiment of a conductive adhesive tape of the present invention.
FIG. 2 shows an enlarged plan view of a terminal portion of the conductive adhesive tape shown in FIG. 1.
FIG. 3 shows a cross section taken along line A-A of the terminal portion shown in FIG. 2.
FIG. 4 is a process diagram for describing a method for producing a conductive adhesive tape shown in FIG. 1:
   (a) illustrating a step of separately preparing an adhesive layer and a conductive layer,
   (b) illustrating a step of bonding the adhesive layer and the conductive layer,
   (c) illustrating a step of forming projected portions,
   (d) illustrating a step of forming a conductive layer folded portion, and
   (e) illustrating a step of pressing the conductive adhesive tape.

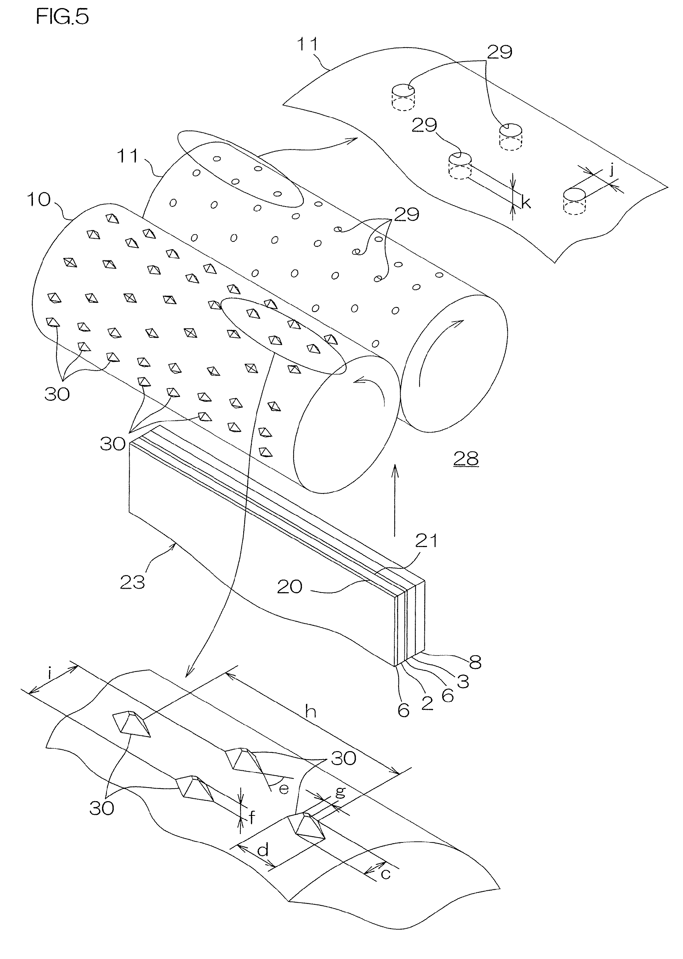

FIG. 5 shows a schematic perspective view of a punching apparatus.

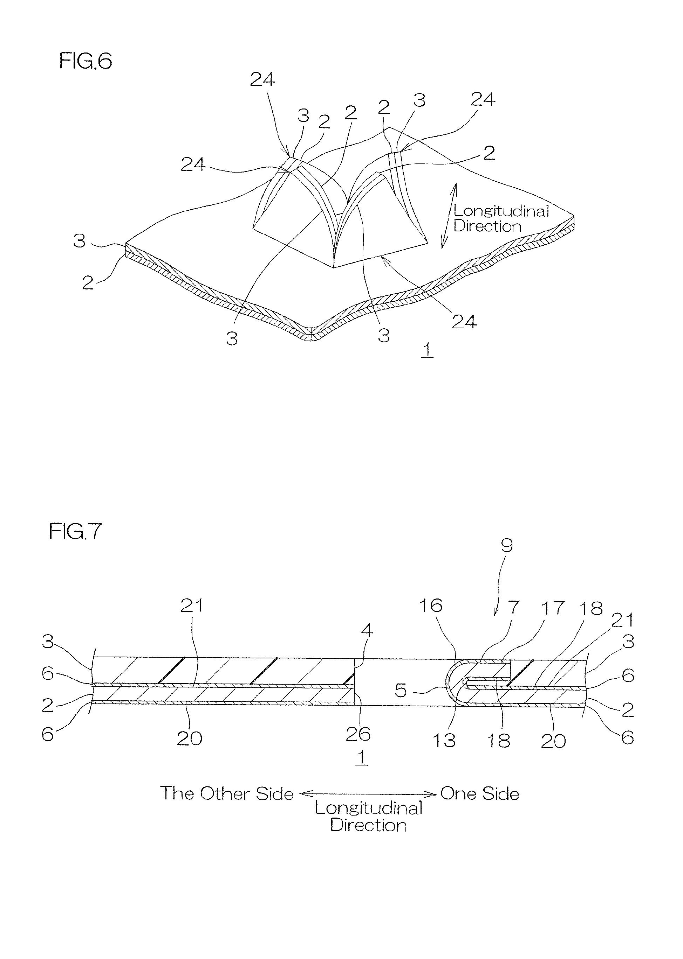

FIG. 6 shows an enlarged perspective view of the projected portions.
FIG. 7 shows a cross-sectional view of another embodiment (embodiment in which the conductive layer passage portion and the conductive layer folded portion are formed into a generally J-shape in cross section) of the conductive adhesive tape of the present invention.

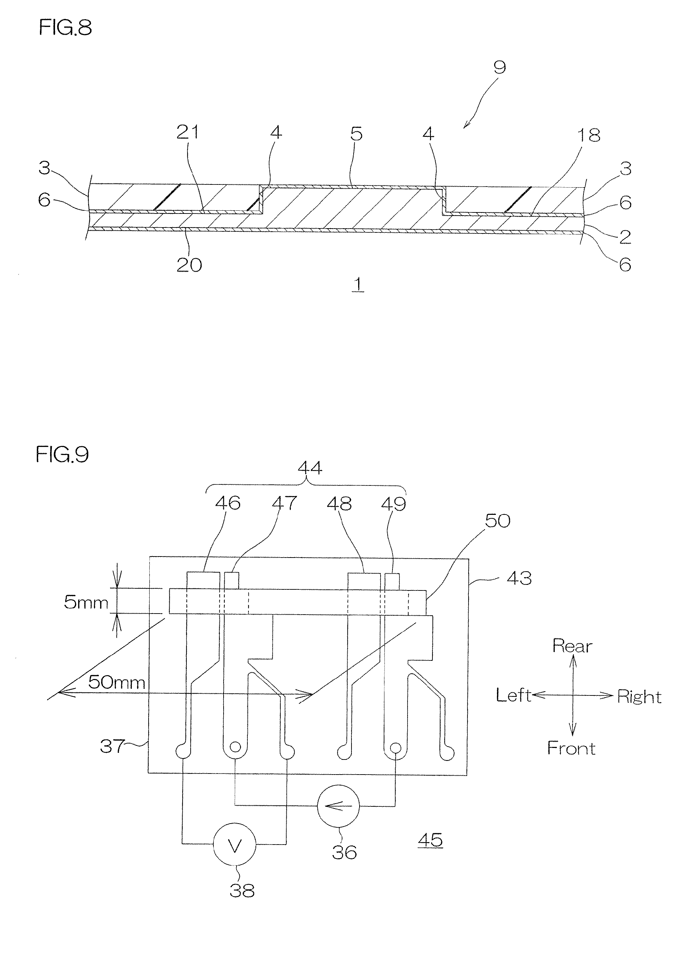

FIG. 8 shows a cross-sectional view of another embodiment (embodiment in which the conductive layer passage portion closes the adhesive layer through-hole) of the conductive adhesive tape of the present invention.
FIG. 9 shows a plan view of a sample for endurance evaluation used in evaluations (endurance test) in Examples.

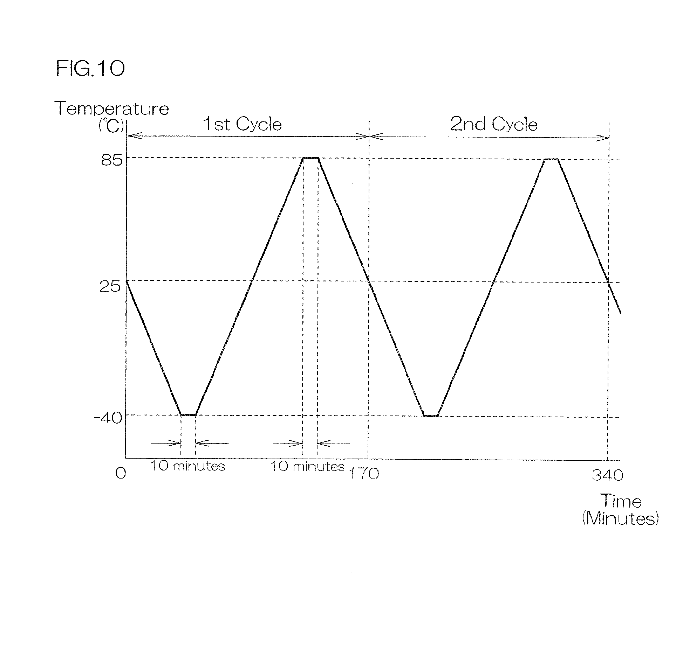

FIG. 10 shows a temperature profile (1sit cycle to 2nd cycle) in evaluations (endurance test) in Examples.

### DETAILED DESCRIPTION OF THE INVENTION

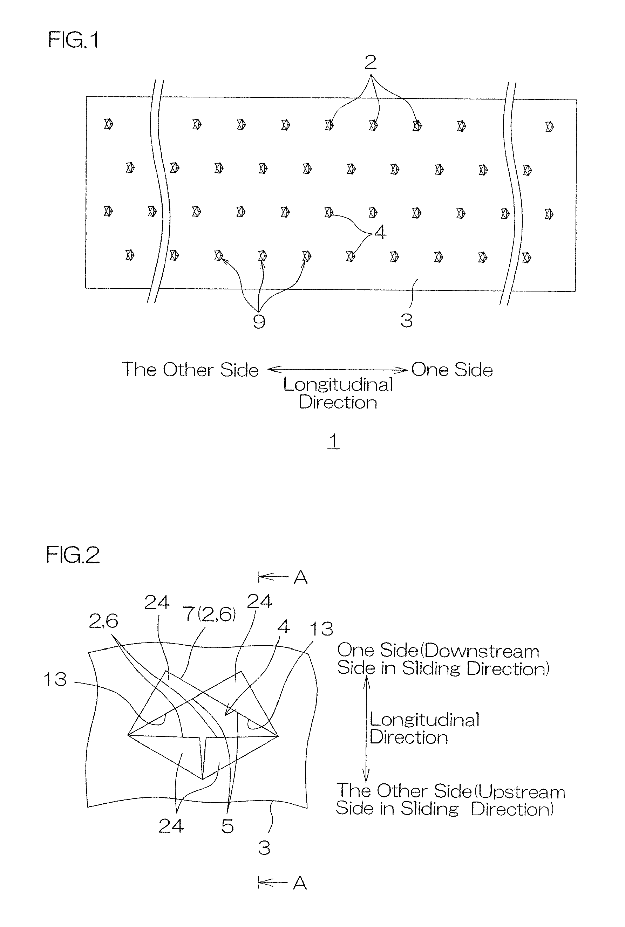

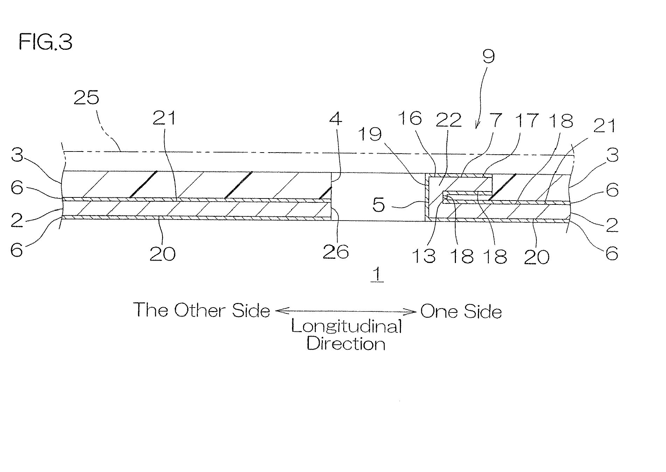

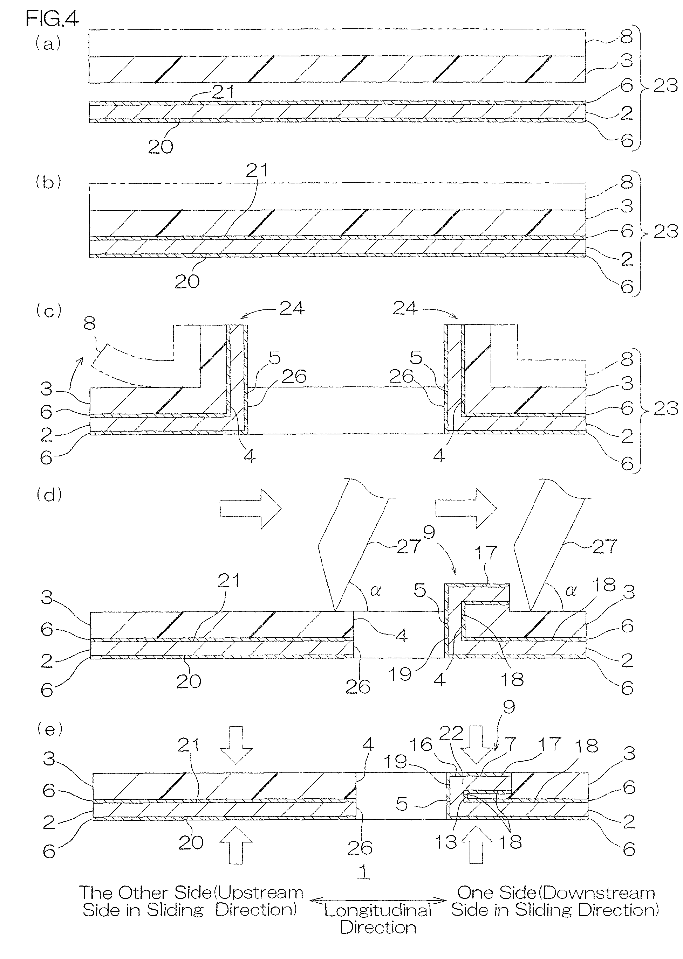

FIG. 1 shows plan view of an embodiment of a conductive adhesive tape of the present invention; FIG. 2 shows an enlarged plan view of terminal portions of the conductive adhesive tape shown in FIG. 1; FIG. 3 shows a cross section taken along line A-A of the terminal portion shown in FIG. 2; FIG. 4 is a process diagram for describing a method for producing a conductive adhesive tape shown in FIG. 1; FIG. 5 shows a schematic perspective view of a punching apparatus; and FIG. 6 shows an enlarged perspective view of the projected portions.

In FIGs. 1, 2 and 6, the low melting point metal layer 6 described later is omitted to clearly show relative positions of the conductive layer passage portion 5 and the conductive layer folded portion 7 to be described later. In FIG. 6, the release sheet 8 to be described later is omitted to clearly show relative positions of the conductive layer passage portion 5 and the conductive layer folded portion 7.

In FIGs. 1 and 3, the conductive adhesive tape 1 includes a conductive layer 2 and an adhesive layer 3 formed on the surface of the conductive layer 2.

The conductive layer 2 is an elongated sheet (tape) extending in the longitudinal direction, and examples of conductive materials that form the conductive layer 2 include copper, aluminum, nickel, silver, iron, lead, and alloys thereof Of these conductive materials, in view of conductivity, costs, and workability, copper or aluminum is used, and more preferably, copper is used.

The conductive layer 2 has a thickness of, for example, 10 to 100 µm, preferably 20 to 80 µm, and more preferably 30 to 60 µm.

The adhesive layer 3 is formed on the entire surface or a portion of the surface of the conductive layer 2, and the adhesive materials that form the adhesive layer 3 are not particularly limited. For example, various adhesive materials such as a pressure-sensitive adhesive (sticking agent), a thermosetting adhesive, and a hot-melt adhesive may be used, and these adhesive materials are appropriately selected.

Examples of such adhesive materials include, to be specific, an acrylic adhesive (to be specific, acrylic pressure-sensitive adhesive, that is, acrylic sticking agent), a rubber adhesive, a polyolefin adhesive, an epoxy adhesive, a polyimide adhesive, a phenol adhesive, a urea adhesive, a melamine adhesive, an unsaturated polyester adhesive, a diallyl phthalate adhesive, a silicone adhesive, and a urethane adhesive.

Of these adhesive materials, in view of simple adhesion process, preferably, a pressure-sensitive adhesive (sticking agent) is used, and in view of adhesion reliability or durability, more preferably, an acrylic pressure-sensitive adhesive (acrylic sticking agent) is used.

An acrylic pressure-sensitive adhesive includes, for example, an acrylic polymer as a main component.

An acrylic polymer is obtained, for example, by polymerizing a monomer containing an alkyl (meth)acrylate (alkyl methacrylate and/or alkyl acrylate) as a main component, and containing a copolymerizable monomer that is copolymerizable with the alkyl (meth)acrylate as a sub component.

Examples of alkyl (meth)acrylates include an alkyl (meth)acrylate having 1 to 10 carbon atoms in its alkyl moiety such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, and decyl (meth)acrylate.

Preferably, alkyl (meth)acrylate having 2 to 6 carbon atoms in its alkyl moiety, more preferably, n-butyl (meth)acrylate is used.

Alkyl (meth)acrylate may be used alone or in combination of two or more.

The mixing ratio of the alkyl (meth)acrylate relative to the total amount of the monomer is, for example, 70 to 99 mass%, and preferably 90 to 98 mass%.

Examples of copolymerizable monomers include polar group-containing monomers and polyfunctional monomers (e.g., polyalkanol polyacrylate).

Examples of polar group-containing monomers include carboxyl group-containing monomers (including acid anhydride group-containing monomers such as maleic anhydride, and itaconic acid anhydride) such as (meth)acrylic acid, itaconic acid, maleic acid, fumaric acid, and crotonic acid, and examples also include a hydroxyl group-containing monomer, an amide group-containing monomer, an amino group-containing monomer, a glycidyl group-containing monomer, a cyano group-containing monomer, a heterocyclic ring-containing vinyl monomer, an alkoxy group-containing monomer, a sulfonic acid group-containing monomer, a phosphoric acid group-containing monomer, a maleimide group-containing monomer, and an isocyanate group-containing monomer.

As the copolymerizable monomer, preferably, a polar group-containing monomer is used, more preferably, a carboxyl group-containing monomer, and even more preferably, (meth)acrylic acid is used.

The mixing ratio of the copolymerizable monomer relative to the total amount of the monomer is, for example, 1 to 30 mass%, preferably 2 to 10 mass%.

Monomers may be polymerized by a known method, and examples thereof include, for example, solution polymerization, emulsion polymerization, and bulk polymerization. Preferably, solution polymerization is used.

In solution polymerization, a known polymerization initiator, a solvent, etc. are blended in a monomer at an appropriate proportion.

Examples of polymerization initiators include oil-soluble polymerization initiators such as azo polymerization initiators (to be specific, for example, 2,2'-azobisisobutyronitrile), and peroxide polymerization initiators.

Preferably, azo polymerization initiators are used. Polymerization initiators may be used alone, or in combination of two or more.

Examples of solvents include organic solvents such as esters (such as ethyl acetate); aromatic hydrocarbons (such as toluene); aliphatic hydrocarbons (such as n-hexane), alicyclic hydrocarbons (such as cyclohexane), and ketones (such as methyl ethyl ketone). Preferably, aromatic hydrocarbons are used. Solvents may be used alone or in combination of two or more.

The above-described monomer, polymerization initiator, and solvent are blended, thereby preparing a monomer solution; and the prepared monomer solution is heated, for example, to 50 to 70°C, thereby polymerizing the monomer. An acrylic polymer is obtained in this manner.

A cross-linking agent may be blended in the polymerized acrylic polymer.

By blending a cross-linking agent in the acrylic polymer, the acrylic polymer is crosslinked, and such crosslinking improves cohesiveness of adhesive materials.

Examples of cross-linking agents include isocyanate cross-linking agents (e.g., trimethylolpropane adduct of tolylene diisocyanate), epoxy cross-linking agents, and melamine cross-linking agents. Preferably, isocyanate cross-linking agents, or epoxy cross-linking agents are used, and more preferably, isocyanate cross-linking agents are used.

The mixing ratio of the cross-linking agent relative to 100 pans by mass of the acrylic polymer is, for example, 0.1 parts by mass or more and 5 parts by mass or less, preferably, 3 parts by mass or less.

In the adhesive material, as necessary, known additives such as a cross-linking accelerator, a tackifying resin, an antioxidant, a filler, a coloring agent, an ultraviolet absorber, an oxidation inhibitor, a plasticizer, a softener, a surfactant, and an antistatic agent may be added at an appropriate proportion.

The adhesive layer 3 is formed as follows. The above-described adhesive material is applied on the surface of a known release sheet 8 (ref: phantom line in FIG. 4), and thereafter, the solvent blended therein as necessary is removed by heating, thereby forming the adhesive layer 3 on the surface of the release sheet 8. The adhesive layer 3 is then transferred on the conductive layer 2. Alternatively, the adhesive layer 3 can also be formed as follows. The above-described adhesive material is directly applied on the surface of the conductive layer 2, and thereafter, the solvent blended therein as necessary is removed. The surface of the release sheet 8 is treated, for example, with silicone and the like.

The thus formed adhesive layer 3 has a thickness of, for example, 10 to 100 µm, preferably 20 to 80 µm, and more preferably, 30 to 60 µm.

The conductive adhesive tape 1 is provided with terminal portions 9.

The plurality of terminal portions 9 are arranged with a space provided therebetween in the longitudinal direction and in the width direction (direction perpendicular to the longitudinal direction) of the conductive adhesive tape 1.

As shown in FIGs. 2 and 3, at the terminals portion 9, an adhesive layer through-hole 4 that penetrates the adhesive layer 3 in the thickness direction is formed in the adhesive layer 3, and, the conductive layer 2 is provided with a conductive layer passage portion 5 formed in the adhesive layer through-hole 4.

The adhesive layer through-holes 4 are formed in correspondence with the terminal portions 9, and formed into a generally triangular shape (to be specific, a generally isosceles triangular shape) when viewed from the top.

The conductive layer passage portions 5 are provided in correspondence with the adhesive layer through-holes 4, and out of four sides (four faces) of the adhesive layer through-hole 4 in the adhesive layer 3, two conductive layer passage portions 5 are provided continuously along two inner peripheral faces 13 adjacent to each other in the width direction, the conductive layer passage portion 5 being disposed at one side in the longitudinal direction so as not to close the adhesive layer through-hole 4.

At the front-side end portion 22 of the conductive layer passage portion 5 reaching the surface of the adhesive layer 3, a conductive layer folded portion 7 that is folded over along the surface of the adhesive layer 3 is formed.

The conductive layer folded portion 7 is formed so as to be folded over toward one side in the longitudinal direction from the front-side end portion 22 of the conductive layer passage portion 5, and is formed from projected portions 24 (described later) in the folding over step (ref: FIG. 4 (d)) to be described later. The conductive layer folded portion 7 is formed so as to be projected in a generally triangular shape when viewed from the top, the conductive layer folded portion 7 being projected from the front-side end portion 22 of the conductive layer passage portion toward one side in the longitudinal direction 5, obliquely towards both outer sides in the width direction.

The conductive layer passage portion 5 and the conductive layer folded portion 7 are formed into a generally L-shape in cross section, and, in continuation from the conductive layer 2 formed on the back surface of the adhesive layer 3, formed into a generally U-shape in cross section.

In the conductive adhesive tape 1, a low melting point metal layer 6 is provided on the back surface 20 and the front surface 21 of the conductive layer 2.

To be specific, the low melting point metal layer 6 is provided on the back surface 20 of the conductive layer 2; and at the terminal portion 9, the low melting point metal layer 6 is provided continuously at the outside face 19 (facing the adhesive layer through-hole 4) of the conductive layer passage portion 5, at the front-side end face 16 of the conductive layer passage portion 5 reaching the surface of the adhesive layer 3, and at the external face 17 exposed from the adhesive layer 3 at the conductive layer folded portion 7.

Furthermore, the low melting point metal layer 6 is provided on the front surface 21 of the conductive layer 2; and at the terminal portion 9, the low melting point metal layer 6 is formed continuously with the internal face 18 of the conductive layer passage portion 5 in close contact with the adhesive layer 3, and with the internal face 18 of the conductive layer folded portion 7 in close contact with the adhesive layer 3.

The low melting point metal layer 6 has a thickness of, for example, 0.5 to 30 µm, preferably 3 to 20 µm.

Examples of low melting point metals that form the low melting point metal layer 6 include an alloy of at least two metals selected from tin, bismuth, and indium. As the low melting point metal, preferably, a tin-bismuth alloy or a tin-indium alloy is used, and more preferably, a tin-bismuth alloy is used.

Tin-bismuth alloy has a bismuth concentration of, for example, 30 to 80 mass%, preferably 45 to 70 mass%.

When the bismuth concentration is outside the above-described range, the melting point of the low melting point metal layer 6 may become high.

When the bismuth concentration exceeds the above-described range, in addition to the above-described point (case), moreover, the low melting point metal may become brittle, and breaking (cracks) may be generated in the low melting point metal layer 6.

The tin-indium alloy has an indium concentration of, for example, 40 to 65 mass%.

The low melting point metal has a melting point lower than the melting point of each of the metals forming the alloy, to be specific, 180°C or less, for example, 110 to 180°C, preferably, 120 to 150°C. The melting point of the low melting point metal is measured by DSC (Differential scanning calorimetry).

When the melting point of the low melting point metal exceeds the above-described temperature, the low melting point metal cannot be melted by the heating at low temperature when the conductive layer passage portion 5 and the conduction object are bonded, and therefore the bonding between the conductive layer passage portion 5 and the conduction object through the low melting point metal layer 6 may become difficult.

Next, a method for producing the conductive adhesive tape 1 is described with reference to FIG. 4.

In this method, as shown in FIG. 4 (a), the conductive layer 2 and the adhesive layer 3 are prepared separately.

The low melting point metal layer 6 is formed on the front surface 21 and the back surface 20 of the conductive layer 2.

To prepare such a conductive layer 2, for example, the low melting point metal layer 6 is laminated, for example, by plating, on the front surface 21 and the back surface 20 of the above-described conductive layer 2 composed of a conductive material.

A laminate of a commercially available product, i.e., the low melting point metal layer 6 is already laminated on the front surface 21 and the back surface 20 of the conductive layer 2 can also be used as is.

The above-described release sheet 8 is laminated on the surface (the face opposite to the back surface facing the conductive layer 2) of the adhesive layer 3.

Then, as shown in FIG. 4(b), the conductive layer 2 and the adhesive layer 3 are bonded.

To be specific, the low melting point metal layer 6 formed on the front surface 21 of the conductive layer 2 is bonded to the back surface of the adhesive layer 3. A laminate 23 including the low melting point metal layer 6, the conductive layer 2, the low melting point metal layer 6. the adhesive layer 3, and the release sheet 8 is produced in this manner.

Then, as shown in FIG. 4(c) and FIG. 4 (d), the terminal portion 9 is formed in the laminate 23.

To form the terminal portion 9 on the laminate 23, first, as shown in FIG. 4 (c), a through-hole 26 is formed on the position corresponding to the terminal portion 9, and at the same time, projected portions (burrs) 24 projecting toward one side (front side, the release sheet 8 side) in the thickness direction of the laminate 23 are formed (projected portion forming step).

To form the through-hole 26 and the projected portions 24, a known punching method is used.

To be specific, as shown in FIG. 5, a punching apparatus 28 including a male roll 10 on which pins 30 are formed, and a female roll 11 on which depressions 29 are formed is used.

In the punching apparatus 28, the male roll 10 is provided so as to be rotatable, and formed so that a plurality of pins 30 are projected on the surface thereof. The plurality of pins 30 are arranged to be spaced apart in the rotation direction and the axis direction of the male roll 10, and the pins 30 are formed into a generally quadrangular pyramid with their apexes chamfered.

The female roll 11 is disposed adjacent to the male roll 10, and is provided so that the female roll 11 can be driven in accordance with the driving and rotation of the male roll 10.
The plurality of depressions 29 are formed in correspondence with the plurality of pins 30 of the male roll 10, to be specific, are formed so that the pins 30 are fitted in the depressions 29, and are formed into a generally cylindrical shape depressing inward.

The size of the pin 30 is as follows: a rotation direction length c of, for example, 0.5 to 3 mm, preferably, 0.5 to 2 mm; an axis direction length d of; for example, 0.5 to 3 mm, preferably, 0.5 to 2 mm; and an angle e between continuous two bases of, for example, 30 to I20 degrees, preferably 40 to 100 degrees. The pin 30 has a height f (height in the projection direction) of, for example, 0.5 to 3 mm, preferably 1 to 2 mm. The chamfered portion has a width g of, for example, 0.01 to 0.5 mm, preferably 0.02 to 0.4 mm.

A pitch i of the pins 30 adjacent to each other in the rotation direction is, for example, I to 5 mm, preferably, 1.5 to 4 mm, and a pitch h of the pins 30 adjacent to each other in the axis direction is, for example, 1 to 4 mm, preferably 2 to 3 mm.

The size of the depression 29 is as follows: an internal diameter j of 0.5 to 3 mm, and a depth k of, for example, 0.5 to 3 mm. The pitch between the depressions 29 is the same as the above-described pitch of the pins 30.

In the punching apparatus 28, the female roll 11 is driven in accordance with the driving and rotation of the male roll 10, and in this fashion, the pins 30 are fitted into the depressions 29 by turns.

In this punching method, as shown in the arrow in FIG. 5, the laminate 23 is inserted between the male roll 10 and the female roll 11. To be specific, the laminate 23 is inserted between the male roll 10 and the female roll 11 so that the low melting point metal layer 6 formed on the back surface 20 of the conductive layer 2 faces the male roll 10, and the release sheet 8 formed on the surface of the adhesive layer 3 faces the female roll 11.

Then, the laminate 23 is pierced in the depressions 29 by the pins 30. In this fashion, as shown in FIG. 6, the projected portions (burrs) 24, i.e., the laminate 23 projected toward the front side (the release sheet 8 side), are formed, and at the same time, the through-holes 26 are formed.

The through-hole 26 is formed, when viewed from the top, into substantially the same shape as that of the above-described adhesive layer through-hole 4 of the adhesive layer 3, to be specific, into a generally square shape when viewed from the top (to be specific, generally rhombus).

The projected portions 24 match the plane shape of the pins 30, to be specific, formed into a generally triangular shape, and four projected portions 24 are formed so as to project upward from the peripheral end portion of each side of the through-hole 26.

After the projected portion forming step, as shown in the phantom line arrow in FIG. 4(c), the release sheet 8 is removed from the adhesive layer 3.

Then, as shown in FIG. 4(d), of the four projected portions 24, two projected portions 24 of the other side in the longitudinal direction are restored, and at the same time, two projected portions 24 of one side in the longitudinal direction is folded over along the surface of the adhesive layer 3 (folding over step).

To be specific, as shown in the arrow in FIG. 4(d), for example, a squeegee 27 is slid along the surface of the adhesive layer 3.

The squeegee 27 is formed to extend along the width direction, formed into a generally blade shape in its cross section, and disposed in a manner such that its distal end is slidable on the surface of the adhesive layer 3.

The distal end of the squeegee 27 is slid along the surface of the adhesive layer 3 from the other side toward one side in the longitudinal direction so as to pass the projected portions 24. The relative velocity of the squeegee 27 to the adhesive layer 3 is, for example, 1 to 20 m/min. An angle a formed between the squeegee 27 and the surface of the adhesive layer 3 (the surface of the adhesive layer 3 from the portion in contact with the squeegee 27 toward the downstream side in the sliding direction) is, for example, 10 to 80 degrees, preferably 15 to 75 degrees.

By sliding the squeegee 27 along the surface of the adhesive layer 3, the free end portions of the upstream side two projected portions 24 in the sliding direction is unfolded (that is, restored to the original position (the position before being penetrated by the pins 30)) along the downstream side in the sliding direction.

Afterwards, (the free end portion of) the remaining downstream side two projected portions 24 in the sliding direction is folded over toward the downstream side in the sliding direction with the front-side end portion 22 of the conductive layer passage portion 5 as the pivot point. The conductive layer folded portion 7 is formed along the surface of the adhesive layer 3 in this manner.

The surface of the low melting point metal layer 6 formed at the external face 17 exposed from the adhesive layer 3 at the conductive layer folded portion 7 is formed at a more front side than the surface of the adhesive layer 3. That is, the conductive layer folded portion 7 is formed so as to be projected toward the front side from the surface of the adhesive layer 3.

The terminal portion 9 is formed on the laminate 23 in this manner.

Thereafter, as shown in FIG. 4(e), the laminate 23 is pressed. The pressing is performed, for example, with a known separator (not shown) interposed between the surface of the adhesive layer 3 of the laminate 23 and a presser. The conditions of the pressing are, for example, a pressure of, for example, 0.05 to 2 MPa. As necessary, the pressing can be performed with heating, and in such a case, the heating temperature is, for example, 20 to 80°C.

The conductive layer folded portion 7 is thus embedded in the adhesive layer 3, and formed in a manner such that the surface of the low melting point metal layer 6 formed on the external face 17 of the conductive layer folded portion 7 is substantially flush (that is, flat) with the surface of the adhesive layer 3 in the thickness direction.

The conductive adhesive tape 1 is obtained in this manner.

In the thus obtained conductive adhesive tape 1, the surface area of each of the terminal portions 9, that is, the total area of the low melting point metal layer 6 formed at the front-side end face 16 of the conductive layer passage portion 5 and the two external faces 17 of the conductive layer folded portions 7 is, for example, 0.05 to 0.5 mm², and the surface area of the terminal portions 9 in total per 30 mm² of the conductive adhesive tape 1 is, for example. 0. 15 to 5.0 mm²_{.}

Such a conductive adhesive tape 1 is used for electrical conduction of components (conduction object) 25 (ref: FIG. 3) disposed with a space provided between each other. To be more specific, for example, the conductive adhesive tape 1 is used for grounding printed wiring boards, external shield cases of electronic devices, and grounding for preventing static electricity; and internal wiring of power source devices or electronic devices (e.g., liquid crystal display device, organic EL (electroluminescence) display device, PDP (plasma display panel), display device for electronic papers, and solar battery).

To electrically conduct the above-described components 25 using the conductive adhesive tape 1, first, as shown by the phantom line in FIG. 3, the above-described adhesive layer 3 of the conductive adhesive tape 1 is bonded to the above-described components 25. That is, the surface of the adhesive layer 3 is pressure bonded to the surface of two components 25 (in FIG. 3, only one is shown by the phantom line).

Thereafter, the conductive adhesive tape 1 is heated, for example, to a temperature of the melting point of the above-described low melting point metal layer 6 or more. The heating temperature is, for example, 110 to 180°C.

The low melting point metal layer 6 is thus melted, and then the conductive layer passage portion 5 and the conductive layer folded portion 7 are bonded to the above-described component 25 with the low melting point metal layer 6 interposed therebetween, thereby electrically connecting them. The components 25 are electrically conducted through the conductive adhesive tape 1 in this manner.

With the conductive adhesive tape 1, when electrically connecting with the above-described components 25, the conductive adhesive tape 1 is heated at low temperature to melt the low melting point metal layer 6 provided at the front-side end face Ib of the conductive layer passage portion 5, and the adhesive strength between the conductive layer passage portion 5 and the above-described component 25 can be improved through the low melting point metal layer 6 in this manner.

Furthermore, with the conductive adhesive tape 1, the low melting point metal layer 6 is formed also at the external face 17 of the conductive layer folded portion 7, and therefore the contact area between component 25, and the external face 17 of the conductive layer folded portion 7 and the front-side end face 16 of the conductive layer passage portion 5 can be widely ensured. Furthermore, the low melting point metal layer 6 formed at the external face 17 of the conductive layer folded portion 7 improves the adhesive strength between the conductive layer folded portion 7 and the above-described component 25, and even more excellent conductivity and durability can be obtained.

Therefore, the above-described component 25, and the conductive layer passage portion 5 and the conductive layer folded portion 7 are electrically connected reliably.

Thus, excellent conductivity between the components 25 can be ensured, while the conductivity can be kept for a long period of time.

In the above description, the projected portion forming step and the folding over step are performed with the punching apparatus 28 including the male roll 10 and the female roll 11. However, for example, although not shown, a punching apparatus 28 including a male plate formed with pins 30 and a female plate formed with depressions 29 can also perform such a projected portion forming step and a folding over step.

To be specific, a laminate 23 is disposed between the male plate and the female plate, and the laminate 23 sandwiched by the male plate and the female plate is pressed so that the pins 30 and the depressions 29 are fitted.

Furthermore, in the description above, the pressing step of FIG. 4(e) is performed, but the conductive adhesive tape 1 can also be obtained without performing such a pressing step.

FIG. 7 shows a cross-sectional view of another embodiment (embodiment in which the conductive layer passage portion and the conductive layer folded portion are formed into a generally J-shape in cross section) of the conductive adhesive tape of the present invention, and FIG. 8 shows a cross-sectional view of another embodiment (embodiment in which the conductive layer passage portion closes the adhesive layer through-hole) of the conductive adhesive tape of the present invention. In FIGs. 7 and 8, components corresponding to the above-described components have the same reference numerals, and their detailed descriptions are omitted.

In the above description for FIG. 3, FIG. 4(d), and FIG. 4(e), the conductive layer passage portion 5 and the conductive layer folded portion 7 are formed into a generally L-shape in cross section, but the shape is not particularly limited. Depending on the conditions of the projected portion forming step, far example, as shown in FIG. 7, the conductive layer passage portion 5 and the conductive layer folded portion 7 may be formed into a generally J-shape in cross section.

The conductive layer passage portion 5 is formed, for example, into a generally C-shape in cross section, i.e., a generally C-shape opening toward one side in the longitudinal direction.

In the description above, the conductive layer passage portion 5 is provided along the inner peripheral faces 13 of the adhesive layer through-hole 4 so as not to close the adhesive layer through-hole 4. However, as shown in FIG. 8, the conductive layer passage portion 5 can also be provided so as to close the adhesive layer through-hole 4.

In FIG. 8, the conductive layer passage portion 5 fills the adhesive layer through-hole 4 without gaps, and is formed so as to project from the surface of the conductive layer 2 toward the front side.

Preferably, as shown in FIG. 3, the conductive layer passage portion 5 is provided along the inner peripheral faces of the adhesive layer through-hole 4 so as not to close the adhesive layer through-hole 4.

Such a conductive layer passage portion 5 is formed, compared with the conductive layer passage portion 5 of FIG. 8, by an easier projected portion forming step. Therefore, the producing steps can be made simpler.

Furthermore, in the description above, the conductive layer folded portion 7 is formed, and then the low melting point metal layer 6 is formed at the external face 17. However, for example, although not shown, the terminal portion 9 can be formed without forming the conductive layer folded portion 7.

In such a case, the conductive layer passage portion 5 is bonded to the above-described components 25 with only the low melting point metal layer 6 formed at the front-side end face 16 of the conductive layer passage portion 5 formed therebetween.

Preferably, as shown in FIG. 3, the conductive layer folded portion 7 is formed, and in addition, the low melting point metal layer 6 is formed at the external face 17.

Furthermore, in the description above, the low melting point metal layer 6 is provided at the internal face 18 closely contacting the adhesive layer 3. However, for example, the conductive layer 2 and the adhesive layer 3 can be directly in contact with each other, without providing the low melting point metal layer 6 at the internal face 18 closely contacting the adhesive layer 3.

Preferably, the low melting point metal layer 6 is provided at the internal face 18 of the conductive layer 2 closely contacting the adhesive layer 3.

The low melting point metal layer 6 is thus interposed between the conductive layer 2 and the adhesive layer 3, and therefore when the adhesive layer 3 is composed of an acrylic polymer of a monomer containing a polar group-containing monomer as a sub component, the low melting point metal layer 6 can effectively prevent corrosion or discoloration of the conductive layer 2 due to the polar group-containing monomer remained in the acrylic polymer.

In the description above of FIG. 2, the adhesive layer through-hole 4 is formed into a generally triangle shape when viewed from the top. However, the shape of the adhesive layer through-hole 4 is not particularly limited, and the adhesive layer through-hole 4 may be formed into an appropriate shape, such as a circle shape. Regarding FIG. 8 as well, the shape of the conductive layer passage portion 5 when viewed from the top is not particularly limited, and the conductive layer passage portion 5 can be formed into an appropriate shape, such as a generally polygonal shape (including, for example, a generally square shape) or circular shape when viewed from the top.

### Examples

While the present invention is described in more detail in the following using Examples and Comparative Examples, such is for illustrative purpose only and it is not to be construed restrictively.

Example 1

(Production of acrylic pressure-sensitive adhesive)

97 parts by mass of n-butyl acrylate, 3 parts by mass of acrylic acid, 0.2 parts by mass of 2,2'-azobisisobutyronitrile, and 27 parts by mass of toluene were introduced into a separable flask, and the mixture was stirred for 1 hour while introducing nitrogen gas. Thereafter, the temperature was increased to 63°C to allow the mixture to react for 10 hours (solution polymerization), and toluene was further added to adjust the concentration, thereby producing a toluene solution of acrylic polymer having a solid content concentration of 30 mass%.

Next, to the toluene solution of acrylic polymer, 2 parts by mass (by solid content) of an isocyanate cross-linking agent (trade name "CORONATER L", trimethylolpropane adduct of tolylene diisocyanate, manufactured by Nippon Polyurethane Industry Co., Ltd.) relative to 100 parts by mass of the acrylic polymer was added, thereby producing (a toluene solution) of an acrylic pressure-sensitive adhesive.

(Production of Laminate)

On the surface of an elongated release sheet with its surface treated with silicone, the toluene solution of the acrylic pressure-sensitive adhesive was applied so that the thickness thereof after dried is 45 µm, and dried at 130°C for 3 minutes in an oven, thereby forming an adhesive layer.

Separately, an elongated conductive layer composed of copper and having a thickness of 35 µm was prepared. The elongated conductive layer was provided with a low melting point metal layer composed of a tin-bismuth alloy (bismuth concentration 57±5 mass%, melting point 139°C) and having a thickness of 10 µm laminated on the front surface and the back surface thereof (ref: FIG. 4 (a)).

Then, the above-described conductive layer and adhesive layer were bonded, and a laminate including the low melting point metal layer, the conductive layer, the low melting point metal layer, the adhesive layer, and the release sheet was made (ref: FIG. 4 (b)). The laminate was wound around a winding roll.

(Formation of projected portion)

The laminate was fed from the winding roll to a punching apparatus including the above-described male roll and female roll, and projected portions (burrs) were termed with the punching apparatus.

In the punching apparatus, pins are disposed with a space provided therebetween in the rotation direction and the axis direction of the male roll; and formed into a quadrangular pyramid with their apexes chamfered. The depressions were formed into a cylindrical shape depressing inward.

The pin has a size of the following. A rotation direction length c was 1.0427 mm, an axis direction length d was 1.8061 mm, an angle e formed between continuous two bases was 60 degrees, a height f was 1.2 mm, and a width g at the chamfered portion was 0.1 mm. A pitch i of pins adjacent to each other in the rotation direction was 1.5 mm, and a pitch h of pins adjacent to each other in the axis direction was 2.598 mm. An internal diameter j of the depressions was 1.6 mm, and a depth k of the depressions was 1.4 mm.

To be specific, the laminate was inserted between the male roll and the female roll, and the laminate was thus punched, thereby forming projected portions (burrs), and through-holes (ref: FIG. 4 (c)). Thereafter, the release sheet was removed from the adhesive layer (ref arrow in FIG. 4(c)).

(Formation of folded portion)

The squeegee was slid along the surface of the adhesive layer.

To be specific, the squeegee was slid relatively along the surface of the adhesive layer from the other side to one side in the longitudinal direction so as to pass the projected portions. The relative velocity of the squeegee relative to the adhesive layer was 1 m/min, and an angle a formed between the squeegee and the surface of the adhesive layer (the surface of the adhesive layer from the portion in contact with the squeegee toward the downstream side in the sliding direction) was 20 degrees.

In this fashion, free end portions of the upstream side two projected portions in the sliding direction was unfolded (folded back) from the proximal end portion toward the downstream side in the sliding direction, and the remaining downstream side two projected portions in the sliding direction was folded over along the downstream side in the sliding direction. Two conductive layer folded portion including the downstream side projected portions in the sliding direction were thus formed (ref: FIG. 4 (d)).

(Pressing)

Next, the laminate was pressed.

To be specific, first, a separator was disposed on the surface of the adhesive layer, and thereafter, the separator and the adhesive layer were pressed (ref: FIG. 4 (e)). Conditions for the pressing were, a temperature of 25°C, and a pressure of 0.5 MPa.

The conductive layer folded portion was thus embedded in the adhesive layer, and the surface of the low melting point metal layer formed at the external face of the conductive layer folded portion, and the surface of the adhesive layer were smoothed.

The conductive adhesive tape was thus obtained (ref: FIG. 1 and PIG. 2).

Example 2

A conductive adhesive tape was obtained in the same manner as in Example 1, except that in formation of the conductive layer folded portion, the angle α formed between the squeegee and the surface of the adhesive layer was changed to 70 degrees.

Comparative Example 1

A conductive adhesive tape was obtained in the same manner as in Example 1, except that in the production of the laminate, a plated layer composed of tin (melting point 232°C) and having a thickness of 10 µm was laminated on the front surface and the back surface of the conductive layer instead of the low melting point metal layer.

### Evaluation

1. Size of terminal portion (surface area)

The conductive adhesive tape obtained in Examples 1, 2, and Comparative Example 1 was cut out into a size of 5 mm × 6 mm (area: 30 mm²), and the separator was removed. This was used as a sample.

The front side (adhesive layer side) of the sample, i.e., image of the terminal portion, was observed using a digital microscope (product number "VHX-600", manufactured by Keyence Corporation.) at a measurement magnification of 200 times (lens: VH-Z20). Next, in measurement mode, the surface area of the terminal portion of the observed image, that is, the total area of the low melting point metal layer formed at the front-side end face of the conductive layer passage portion and the external face of the two conductive layer folded portions was measured.

Also, in the same manner as described above, the surface areas of the all of the terminal portions present in the sample were measured, and the total area of the terminal portions present per 30 mm² of the sample was calculated by summation.

Furthermore, the number of the adhesive layer through-holes was counted in the sample, and by dividing the total area of the terminal portions present in the 30mm² of the sample by the number of the adhesive layer through-holes, an average area per one terminal portion was calculated.

The results are shown in Table 1.

### 2. Endurance Test

As shown in FIG. 9, a terminal substrate 45 for endurance evaluation was prepared.

The terminal substrate 45 includes a substrate 43 composed of a glass-epoxy resin, and a terminal 44 formed thereon into a predetermined pattern. Four terminals 44 are provided with a space provided therebetween in left-right directions, and the terminals 44 (a first terminal 46, a second terminal 47, a third terminal 48, and a fourth terminal 49) extend in front-back directions. The first terminal 46, the second terminal 47, the third terminal 48, and the fourth terminal 49 are disposed sequentially from the left side toward the right side.

Separately, the conductive adhesive tape obtained in Examples 1, 2, and Comparative Example 1 was cut out into a size of 5 mm × 50 mm, and the separator was removed, thereby producing a sample 50.

Then, the rear end portion of the terminal 44, and the sample 50 were connected. In particular, first, the adhesive layer 3, the front-side end face 16 of the conductive layer passage portion 5, and the external face 17 of the conductive layer folded portion 7 of the sample 50, and the terminals 44 were brought into contact with each other, and thereafter, pressure bonded while heating at 150°C for 5 minutes under 2 MPa, thereby allowing the sample 50 and the terminals 44 to adhere to each other.

Also, the front end portions of the second terminal 47 and the fourth terminal 49, and a constant-current power source 36 were connected via a wiring 37, and the front end portions of the first terminal 46 and the second terminal 47, and an electrometer 38 was connected via a wiring 37, thereby forming an electric circuit.

A sample for endurance evaluation was made in this manner.

To the sample for endurance evaluation, an electric current of 2A was passed to the electric circuit, and the resistance value of the sample for endurance evaluation was measured.

Then, with the conditions of endurance (heat cycle) shown in FIG. 10, that is, a heat cycle condition of switching back and forth between -40°C and 85°C to a total of 200 times, an endurance test was conducted for the sample for endurance evaluation.

Thereafter, the resistance value of the sample for endurance evaluation was measured.

Table 1 shows the resistance value of the sample for endurance evaluation before and after the endurance test.

**[Table 1]**

| | | | | |
|---|---|---|---|---|
| Examples and Comparative Examples | | Example 1 | Example 2 | Comparative Examples 1 |

| Adhesive layer | Type | Acrylic Polymer | Acrylic Polymer | Acrylic Polymer |
|---|---|---|---|---|
| | Thickness (µm) | 45 | 45 | 45 |
| Conductive layer | Type | Cu | Cu | Cu |
| | Thickness (µm) | 35 | 35 | 35 |
| Low melting point metal layer | Type | Sn-Bi alloy | Sn-Bi alloy | Sn |
| | Thickness (µm) | 10 | l0 | 10 |
| Terminal portion (low melting point metal layer) | Total Area (mm² Sample 30 mm²) | 0.2 | 0.80 | 0.06 |
| | Average Area per One (mm²) | 0.2 | 0.2 | 0.016 |
| Endurance Test | Before (Non11al Temperature) (S2) | 0.003 | 0.003 | 0.003 |
| | After (S2) | 0.006 | 0.005 | 0.019 |
| | Increase rate (after/before) | 2 times | 1.7 times | 6 times |

## Claims

1. A conductive adhesive tape comprising:
a conductive layer, and an adhesive layer formed on the surface of the conductive layer,
wherein in the adhesive layer, an adhesive layer through-hole penetrating the adhesive layer in the thickness direction thereof is formed,
the conductive layer includes a conductive layer passage portion formed in the adhesive layer through-hole, and
a low melting point metal layer is provided at an end face of the conductive layer passage portion, the end face reaching the surface of the adhesive layer.

2. The conductive adhesive tape according to Claim 1, wherein the conductive layer passage portion is formed along an inner peripheral face of the adhesive layer through-hole so as not to close the adhesive layer through-hole.

3. The conductive adhesive tape according to Claim 1 or 2, wherein a conductive layer folded portion that is folded over along the surface of the adhesive layer is provided at an end portion of the conductive layer passage portion, the end portion reaching the surface of the adhesive layer.

4. The conductive adhesive tape according to Claim 3, wherein the low melting point metal layer is provided at an external face of the conductive layer folded portion exposed from the adhesive layer.

5. The conductive adhesive tape according to Claim 3 or 4, wherein the low melting point metal layer is provided at an internal face of the conductive layer including the conductive layer passage portion and the conductive layer folded portion that are in close contact with the adhesive layer.

6. The conductive adhesive tape according to any one of Claims 1 to 5, wherein a low melting point metal forming the low melting point metal layer has a melting point of 180°C or less.

7. The conductive adhesive tape according to any one of Claims 1 to 6, wherein a low melting point metal forming the low melting point metal layer contains 30 to 80 mass% of bismuth.
